# EUROPÄISCHE PATENTANMELDUNG

(11) **EP 1 741 356 A1**
(43) Veröffentlichungstag der Anmeldung: **10.01.2007**
(21) Anmeldenummer: 05014715.6
(22) Anmeldetag: 07.07.2005
(51) Int. Cl.: A42B 3/04

(54) **Kopfschutzvorrichtung für Hochgeschwindigkeitsfahrzeuge**

(71) Anmelder: SoluVention GmbH, 70806 Kornwestheim (DE)
(72) Erfinder: Diem, Reinhard, 71083 Herrenberg (DE)
(74) Vertreter: Klocke, Peter

(57) **Zusammenfassung**

Kopfschutzvorrichtung (1) für Hochgeschwindigkeitsfahrzeuge, insbesondere für Rennwagen oder Rennboote, mit einer Kopfstütze (6) und mit einem Schutzhelm (2), vorzugsweise Integralhelm, wobei der Schutzhelm (2) direkt oder indirekt über mindestens ein Verbindungselement (3) bewegbar am Fahrzeugchassis (4) fixiert ist. Das Verbindungselement ist (3) als Dämpfungszylinder ausgebildet und an dem Fahrzeugchassis (4) vertikal schwenkbar gelagert. Der Dämpfungszylinder (3) weist in seinem mittleren Bereich eine horizontal angeordnete Schwenkachse (13) auf und ist in jeder Lage ausbalanciert.

## Beschreibung

Die Erfindung betrifft eine Kopfschutzvorrichtung für Hochgeschwindigkeitsfahrzeuge, insbesondere für Rennwagen oder Rennboote, mit einer Kopfstütze und mit einem Schutzhelm, vorzugsweise Integralhelm, wobei der Schutzhelm direkt oder indirekt über mindestens ein Verbindungselement bewegbar am Fahrzeugchassis fixiert ist.

Gegenwärtig sind eine Reihe von Sicherheitseinrichtungen zum Schutz von Fahrern von Rennfahrzeugen für den Fall von Kollisionen mit anderen Fahrzeugen oder mit Streckensicherungseinrichtungen vorgesehen. Solche Sicherungseinrichtungen bestehen einerseits aus einem Rückhaltesystem für den Körper des Fahrers mit Sicherheitsgurten und andererseits aus einer entsprechenden Sicherheitsausrüstung des Fahrzeugs selbst. Dazu zählen beispielsweise ein Überrollbügel, eine Kopfstütze und Versteifungen in der Karosserie, die verhindern sollen, dass der Körper des Fahrers, insbesondere der Kopf bei einem Aufprall mit hoher Geschwindigkeit oder bei Überschlägen übermäßig belastet werden. Bedingt durch ihre Anordnung können die Kopfstützen jedoch nur verhindern, dass der Kopf des Fahrers beim bzw. nach dem Aufprall auf ein Hindernis nach hinten schnellt; in Fahrtrichtung ist hingegen keine Abstützung möglich. Des weiteren sind Schutzhelme, insbesondere sogenannte Integralhelme bekannt, die den Kopf des Fahrers bei einem Aufprall auf Teile der Karosserie durch ihre äußere Helmstabilität schützen und die Gefährdung des Kopfes zumindest verringern.

Diese Schutzsysteme reichen jedoch nicht aus, um bei einem Unfall mit hartem Aufprall den Kopf und die Halswirbelsäule vor äußerst heftigen und ruckartigen Bewegungen, die ein sogenanntes Schleudertrauma verursachen können, zu schützen. Wie tödliche Unfälle bei Autorennen, insbesondere bei Formel-1-Rennen, beweisen, können Kopfstützen in Verbindung mit dem Schutzhelm das Verletzungsrisiko zwar verringern, aber nicht gänzlich verhindern. Es sind Haltevorrichtungen für den Schutzhelm bekannt, die den Helm über flexible Verbindungen am Fahrzeugchassis mit einem ausreichenden Bewegungsspielraum fixieren, so dass bei starken Verzögerungen des Rennwagens ein Wegschleudern oder ein Abknicken des Kopfes nach vorne eingeschränkt ist, wodurch die Gefahr von Halswirbelverletzungen zumindest verringert wird.

Die DE 100 50 310 C1 beschreibt eine Kopfschutzeinrichtung für Rennwagen, mit einer über die Schultern des Fahrers stülpbaren, als Joch ausgebildeten Schulterstütze, über das Rückhaltegurte geführt sind, die den Oberkörper des Fahrers im Sitz fixieren. Um im Falle einer abrupten Verzögerung des Fahrzeugs, wie beispielsweise bei einem Frontalaufprall, die Halswirbelsäule des Fahrers zu schützen, ist vorgesehen, den vom Fahrer getragenen Sturzhelm mittels Bändern am Joch der Kopfschutzeinrichtung festzuhalten, um eine Bewegung des Kopfes relativ zum zurückgehaltenen Oberkörper weitgehendst zu verhindern und somit schwere Genickverletzungen zu vermeiden. Die Bänder sind beidseitig in etwa mittig am Helm angebracht und voneinander beabstandet am oberen Ende des Joches fixiert. Das Material der Bänder ist relativ unelastisch, um den Kopf beim Aufprall nicht auf das Lenkrad schlagen zu lassen. Dies hat den Nachteil, dass die Bänder nur eine geringe Dehnung haben, wodurch die Verzögerung des Kopfes mehr oder weniger abrupt einsetzt. lst der Kopf des Fahrers verdreht, dann ist nur eines der Bänder gespannt und das andere hängt durch. Bei einem Aufprall würde die Vorwärtsbewegung des Helmes zu einer horizontalen Rotationsbeschleunigung des Kopfes mit nicht absehbaren Folgen führen.

Der Erfindung liegt daher die Aufgabe zu Grunde, eine Kopfschutzvorrichtung vorzuschlagen, die dem Fahrer des Hochgeschwindigkeitsfahrzeugs eine erhöhte Sicherheit vor Halswirbelsäulenverletzungen bietet.

Diese Aufgabe wird erfindungsgemäß durch eine Kopfschutzvorrichtung mit den Merkmalen des Anspruchs 1 gelöst. Weitere vorteilhafte Ausgestaltungen sind den Unteransprüchen zu entnehmen.

Bei der erfindungsgemäßen Kopfschutzeinrichtung ist der Schutzhelm über einen Dämpfungszylinder mit dem Fahrzeugchassis verbunden. Durch den Dämpfungszylinder wird die Beschleunigung des Kopfes bei starken Verzögerungen zunehmend gedämpft, so dass die Bewegung bzw. Verzögerung des Kopfes nicht schlagartig einsetzt oder in ihrer Bewegungsrichtung umgekehrt wird. Der Dämpfungszylinder fängt den Helm elastisch federnd ab, wobei die Beschleunigungsenergie im Zylinder gespeichert wird und die auftretenden Kräfte nicht auf den Körper des Fahrers übertragen werden.

Der Dämpfungszylinder kann direkt hinter der Kopfstütze oder am Boden des Fahrzeugchassis vorgesehen sein. Eine tiefe Einbauposition wirkt sich positiv auf die Schwerpunktslage des Rennwagens aus und trägt wesentlich zu einem stabilen, neutralen Fahrverhalten, speziell bei hohen Querbeschleunigungskräften, bei. Ist der Dämpfungszylinder entfernt vom Schutzhelm angeordnet, ist es möglich, den Dämpfungszylinder beispielsweise über eine angelenkte Hebelei oder einen flexiblen, geführten Drahtzug mit dem Schutzhelm zu verbinden. Der Dämpfungszylinder kann auch am Fahrersitz des Rennwagens angeordnet sein, der speziell bei Formel-1-Fahrzeugen einfach lösbar mit dem Fahrzeugchassis verbunden ist. Dadurch kann der Fahrer nach einem schweren Unfall einfach aus dem Rennwagen geborgen werden, ohne dass zuvor die Verbindung zwischen dem Schutzhelm und dem Dämpfungszylinder gelöst werden muss.

Nach einer Weiterbildung der Erfindung ist der Dämpfungszylinder am Fahrzeugchassis verschwenkbar gelagert. Vorzugsweise ist der Dämpfungszylinder um eine horizontale Schwenkachse in vertikaler Richtung bewegbar, die in einem mittleren, vom Schutzhelm entfernten Bereich des Dämpfungszylinders angeordnet ist. Die Höhenlage der Enden des Dämpfungszylinders ist von der Neigung des Kopfes bzw. des Schutzhelmes abhängig, insbesondere veränderbar, wodurch eine vertikale Kopfbewegung des Fahrers möglich ist. Durch seine mittige, drehbare Lagerung ist der Dämpfungszylinder in jeder Lage ausbalanciert und bewirkt somit keine Gewichtsbelastung des Schutzhelmes. Bei einem Aufprall erfolgt eine automatische Ausrichtung des Kopfes durch den am Schutzhelm angelenkten Dämpfungszylinder, dessen Achse in jeder Lage zum Schwerpunkt des Kopfes weist.

Der Dämpfungszylinder enthält als Dämpfungsmedium komprimierte Luft, wobei die Dämpfung über den Fülldruck des Dämpfungszylinders einstellbar ist. Die Dämpfung erfolgt durch Zusammendrücken der vorkomprimierten Luft im Dämpfungszylinder, wodurch eine besonders weiche Abfederung des Schutzhelmes erreicht wird. Die Dämpfung erfolgt progressiv, d. h. die Wirkung des Dämpfungszylinders setzt weich und schonend ein und verstärkt mit zunehmenden Bewegung des Kopfes, wodurch ruckartige Schleuderbewegungen des Kopfes ausgeschlossen sind. Vorteilhafterweise ist der Fülldruck des Dämpfungszylinders geschwindigkeitsabhängig einstellbar, so dass die Dämpfung zu jedem Zeitpunkt optimal an die auftretenden Verzögerungskräfte anpassbar ist. Der Fülldruck beträgt zwischen 0 bar und etwa 5 bar und kann in beide Richtungen manuell oder automatisch, in Stufen oder stufenlos verändert werden. Die zur Einstellung des Dämpfungszylinders notwendige Druckluft kann dabei einem Vorratsbehälter entnommen oder von einer Pumpe erzeugt werden kann.

Zur Einstellung des Fülldrucks ist eine elektronische Steuereinheit vorgesehen, die den Fülldruck automatisch einstellt und an die gefahrene Geschwindigkeit anpasst. Dazu wird der Dämpfungszylinder geschwindigkeitsabhängig aufgepumpt bzw. entleert, wobei Veränderungen der Fahrgeschwindigkeit mit einer typischen Verzögerung von ca. 0,1 sec. eine Anpassung des Fülldrucks bewirken. Nach einem Aufprall des Fahrzeugs wird der Fülldruck des Dämpfungszylinders automatisch schlagartig abgebaut, wodurch ein Rückschleudern des Kopfes beim Entspannen der komprimierten Luft verhindert wird.

Der Schutzhelm ist mit dem Dämpfungszylinder über eine lösbare Arretierungsvorrichtung, vorzugsweise über einen in den Schutzhelm integrierten Befestigungsbügel und einen daran angreifenden Sicherheitshaken beweglich verbunden. Der Sicherheitshaken ist am Dämpfungszylinder starr befestigt und am Befestigungsbügel verschiebbar geführt. Der Sicherheitshaken kann als Karabinerhaken oder dergleichen ausgeführt sein, wodurch er schnell und einfach am Befestigungsbügel fixierbar und vom Befestigungsbügel lösbar ist. Er wird nach dem Einsteigen des Fahrers ins Fahrzeug hinten in den im Schutzhelm integrierten Befestigungsbügel eingehängt. Ergänzend zu einem Betätigungselement am Sicherheitshaken kann eine Fernauslösung in einem dem Fahrer zugänglichen Bereich vorgesehen sein.

Der Befestigungsbügel ist in horizontaler Umfangsrichtung am hinteren Helmbereich angeordnet und erstreckt sich um ca. 50 % des Schutzhelmumfangs, wodurch eine Kopfdrehung des Fahrers um bis zu 60° in beide Richtungen möglich ist. Der Befestigungsbügel dient zur beweglichen Fixierung für den Sicherheitshaken, der bei einer Kopfdrehung seine Position zur Kopfmitte des Fahrers nicht verändert. Der Sicherheitshaken befindet sich bei jeder Kopfstellung in einer mittigen Position hinter dem Fahrerkopf, so dass bei einem Aufprall eine Drehbeschleunigung und die damit verbundene Torsion der Nackenwirbel auch bei verdrehtem Kopf nicht oder nur schwach auftritt.

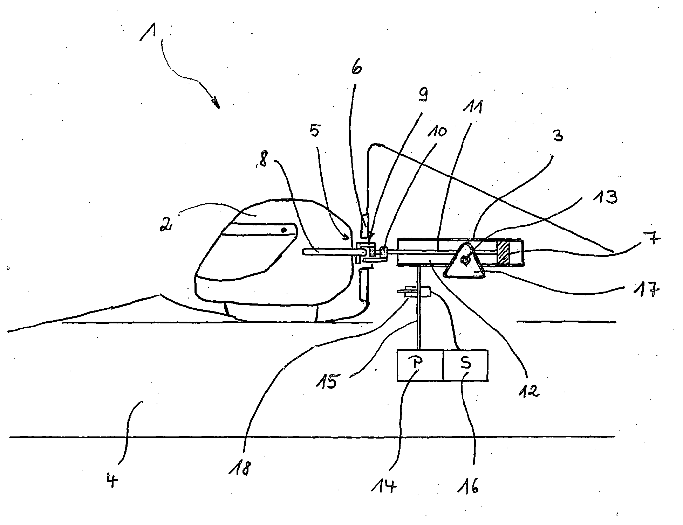

Nachfolgend wird die Erfindung anhand eines in der Zeichnung dargestellten Ausführungsbeispiels näher erläutert.

Die in der einzigen Figur schematisch dargestellte, erfindungsgemäße Kopfschutzvorrichtung 1 besteht im wesentlichen aus einem Schutzhelm 2, der über einen Dämpfungszylinder 3 als Verbindungselement mit einem Fahrzeugchassis 4 bewegbar verbunden ist. Der Dämpfungszylinder 3 ist an einem hinteren Helmbereich 5 des Schutzhelmes 2 angelenkt und um eine horizontal angeordnete Schwenkachse 13 eines Lagerbockes 17 verschwenkbar, wobei der Lagerbock 17 starr mit dem Fahrzeugchassis 4 verbunden ist. Der Schutzhelm 2 stützt sich nach hinten mit seinem hinteren Helmbereich 5 an einer Kopfstütze 6 ab und ist an dem vorderen Ende einer Kolbenstange 11 des Kolben 7 des Dämpfungszylinders 3 befestigt. Die Befestigung erfolgt über einen am Schutzhelm 2 vorgesehenen Befestigungsbügel 8, in den ein mit dem Kolben 7 des Dämpfungszylinders 3 fest verbundener Sicherheitshaken 9 eingreift. Der Sicherheitshaken 9 weist einen Riegel 10 als Sicherungselement auf. Der Riegel 10 stellt sicher, dass sich der Sicherheitshaken 9 nicht unbeabsichtigt vom Befestigungsbügel 8 löst und ist durch eine nicht dargestellte Fernauslösung vom Fahrer betätigbar. Der Befestigungsbügel 8 ist in etwa mittig in horizontaler Umfangsrichtung am hinteren Helmbereich 5 angeordnet und erstreckt sich bis zur Mitte der Seiten des Schutzhelmes 2. Der Sicherheitshaken 9 ist am Befestigungsbügel 8 verschiebbar geführt, wobei der Sicherheitshaken 9 in jeder Kopfstellung mittig am Schutzhelm 2 angreift.

Der Dämpfungszylinder 3 dämpft die nach vorne gerichtete Schleuderbewegung des Schutzhelmes 2 bei einem Aufprall auf ein Hindernis federelastisch. Dazu wird ein Füllraum 12 des Dämpfungszylinders 3 mit nicht dargestellter komprimierter Luft beaufschlagt. Die komprimierte Luft wird von einer Pumpe 14 erzeugt und dem Dämpfungszylinder 3 über eine Versorgungsleitung 15 zugeführt. Der Fülldruck des Füllraums 12 des Dämpfungszylinders 3 wird von einer elektronischen Steuereinheit 16 automatisch und geschwindigkeits abhängig geregelt. Er kann je nach Geschwindigkeit zwischen 0 und 5 bar eingestellt werden, wobei eine Änderung der Geschwindigkeit in ca. 0,1 sec. zu einer Fülldruckanpassung führt. Zwischen dem Dämpfungszylinder 3 und der Pumpe 14 ist ein Steuerventil 18 angeordnet, das nach einem Aufprall die im Füllraum 12 des Dämpfungszylinders 3 verdichtete Luft schlagartig entweichen lässt.

## Patentansprüche

1. Kopfschutzvorrichtung (1) für Hochgeschwindigkeitsfahrzeuge, insbesondere für Rennwagen oder Rennboote, mit einer Kopfstütze (6) und mit einem Schutzhelm (2), vorzugsweise Integralhelm, wobei der Schutzhelm (2) direkt oder indirekt über mindestens ein Verbindungselement (3) und bewegbar am Fahrzeugchassis (4) fixiert ist, **dadurch gekennzeichnet, dass** das Verbindungselement (3) als Dämpfungszylinder ausgebildet ist.

2. Kopfschutzvorrichtung nach Anspruch 1, **dadurch gekennzeichnet, dass** der Dämpfungszylinder (3) am Fahrzeugchassis (4) vertikal schwenkbar gelagert ist.

3. Kopfschutzvorrichtung nach Anspruch 2, **dadurch gekennzeichnet, dass** der Dämpfungszylinder (3) in seinem mittleren Bereich eine horizontal angeordnete Schwenkachse (13) aufweist und der Dämpfungszylinder (3) in jeder Lage ausbalanciert ist.

4. Kopfschutzvorrichtung nach einem der vorangegangenen Ansprüche, **dadurch gekennzeichnet, dass** der Dämpfungszylinder (3) als Dämpfungsmedium komprimierte Luft enthält und der Fülldruck des Dämpfungszylinders (3) geschwindigkeitsabhängig einstellbar ist.

5. Kopfschutzvorrichtung nach einem der vorangegangenen Ansprüche, **dadurch gekennzeichnet, dass** die Kopfschutzvorrichtung (1) eine elektronische Steuereinheit (16) zur automatischen Einstellung des Fülldrucks im Dämpfungszylinder (3) aufweist.

6. Kopfschutzvorrichtung nach Anspruch 1, **dadurch gekennzeichnet, dass** der Dämpfungszylinder (3) über einen Befestigungsbügel (8) und einen daran angreifenden Sicherheitshaken (9) am Schutzhelm (2) beweglich befestigt ist, wobei der Sicherheitshaken (9) mit dem Dämpfungszylinder (3) fest verbunden und am Befestigungsbügel (8) lösbar und verschiebbar geführt ist.

7. Kopfschutzvorrichtung nach Anspruch 6, **dadurch gekennzeichnet, dass** der Befestigungsbügel (8) in horizontaler Umfangsrichtung am hinteren Helmbereich (5) angeordnet ist und sich um ca. 50 % des Helmumfangs erstreckt.
